# EUROPÄISCHE PATENTANMELDUNG

(11) **EP 4 383 128 A1**
(43) Veröffentlichungstag der Anmeldung: **12.06.2024**
(21) Anmeldenummer: 23205415.5
(22) Anmeldetag: 24.10.2023
(51) Int. Cl.: G06K 19/077

(54) **TRANSPONDERVORRICHTUNG SOWIE LAGERUNGSSYSTEM**

(30) Priorität: 05.12.2022 DE 202022106789 U
(71) Anmelder: KaWe Engineering GmbH, 33154 Salzkotten (DE)
(72) Erfinder: Wendisch, Jan, 33154 Salzkotten (DE)
(74) Vertreter: Ostermann, Thomas

(57) **Zusammenfassung**

Die Erfindung betrifft eine Transpondervorrichtung mit einer Basisschicht und mit einem auf derselben aufgebrachten Transponder enthaltend einen integrierten Schaltkreis und eine Antenne, wobei die Basisschicht zusammen mit dem Transponder einen Transponderabschnitt bildet und dass ein relativ zu dem Transponderabschnitt bewegbarer Abdeckabschnitt vorgesehen ist, der über ein Abdeckelement verfügt, das derart ausgebildet ist, dass in einer Abdeckstellung der Transpondervorrichtung, in der das Abdeckelement den Transponder abdeckt, der Transponder durch ein Lesegerät nicht auslesbar ist, und in einer Nichtabdeckstellung der Transpondervorrichtung, in der das Abdeckelement den Transponder nicht abdeckt, der Transponder von dem Lesegerät auslesbar ist.

## Beschreibung

Die Erfindung betrifft eine Transpondervorrichtung mit einer Basisschicht und mit einem auf derselben aufgebrachten Transponder enthaltend einen integrierten Schaltkreis und eine Antenne.

Ferner betrifft die Erfindung ein Lagerungssystem sowie ein Adapter.

Aus der DE 10 2018 200 279 A1 ist eine Transpondervorrichtung mit einem Transponderabschnitt und einem mit demselben verbundenen Transponder enthaltend einen integrierten Schaltkreis und eine Antenne bekannt. Der Transponder ist auf dem Transponderabschnitt aufgebracht und dient zur Kennung von Lebensmitteln. Damit der Transponder mit dem Lebensmittel körperlich verbunden werden kann, ist der Transponderabschnitt über ein Scharnier mit einem klappbaren Bügel verbunden. Der Bügel und der Transponderabschnitt weisen Befestigungsmittel auf, so dass ein Lebensmittel oder eine Verpackung des Lebensmittels lösbar mit der Transpondervorrichtung verbunden werden kann. Das Lebensmittel kann dann zusammen mit der Transpondervorrichtung in einem Fach eines Kühlschranks gelagert werden. Der Kühlschrank weist ein Lesegerät zum Auslesen von in dem Transponder gespeicherten Kennungsdaten auf, so dass eine Bedienperson stets einen Überblick über die in dem Kühlschrank vorhandenen Lebensmittel hat. Soll die Transpondervorrichtung zur Kennung von Waren eingesetzt werden, die in einem Regal oder Schrank eines Lagerungssystems, beispielsweise in der Gesundheitsbranche gelagert sind, wäre der Platz- und Kostenaufwand relativ groß. Dort werden in Fächern, Schubladen, Schalen oder Körben Waren gleichen Typs, beispielsweise Aspirinpackungen eines Herstellers, gelagert. Üblicherweise werden solche Fächer mit Etiketten enthaltend eine Beschriftung zur Kennzeichnung und ggf. mit einem Barcode versehen. Wenn sich ein solcher Arzneimittelschrank beispielsweise in einem Krankenhaus befindet, besteht das Problem, dass rechtzeitig vor Entleerung des jeweiligen Faches die betreffenden Arzneimittel nachbestellt werden müssen, damit das jeweilige Fach wieder aufgefüllt werden kann. Spätestens wenn die letzte Arzneimittelpackung eines Faches durch beispielsweise eine Krankenschwester entnommen wird, muss sie beispielsweise den Barcode des Arzneimittels lesen und einen Bestellvorgang initiieren. Es ist wünschenswert, das Nachbestellen von in Fächern gelagerten Waren zu optimieren.

Aufgabe der vorliegenden Erfindung ist es daher, eine Transpondervorrichtung sowie ein Lagerungssystem derart weiterzubilden, dass auf einfache und sichere Weise ein Nachbefüllen von Fächern, Schalen, Schubladen und dergleichen, die zur Aufnahme von Waren vorgesehen sind, zu verbessern.

Zur Lösung dieser Aufgabe weist die Erfindung die Merkmale des Patentanspruchs 1 auf.

Nach der Erfindung weist eine Transpondervorrichtung ein relativ zu einem Transponderabschnitt desselben bewegbares Abdeckelement auf, das derart ausgebildet ist, dass der Transponder in einer denselben zumindest teilweise überdeckenden Abdeckstellung des Abdeckelementes nicht auslesbar und in einer den Transponder freigebenden Nichtabdeckstellung des Abdeckelementes auslesbar ist. Vorteilhaft kann auf diese Weise die Funktion bzw. Datenübertragungsfähigkeit des Transponders aktiviert bzw. deaktiviert werden. Dies kann zum automatischen Auslesen des Transponders durch beispielsweise ein RFID-Lesegerät genutzt werden, mittels dessen ein automatisches Nachbestellen von Waren eingeleitet wird. Der Nachbestellprozess kann beispielsweise derart gewählt sein, dass die Auslesemöglichkeit eines Transponders dahingehend interpretiert wird, dass die entsprechend gekennzeichneten Waren nachzubestellen sind. Befindet sich das Abdeckelement in der Abdeckstellung mit der Wirkung, dass der Transponder nicht ausgelesen werden kann, erhält das RFID-Lesegerät keine Rückmeldung von dem Transponder, so dass ein Nachbestellen nicht in Gang gesetzt wird. Handhabungstechnisch einfach braucht beispielsweise eine Krankenschwester das Abdeckelement lediglich in die Nichtabdeckstellung verbringen, wenn die durch die Transpondervorrichtung entsprechend gekennzeichneten Waren nachbestellt werden sollen. Der manuelle Eingriff in den Nachbestellprozess ist somit auf ein Minimum reduziert. Darüber hinaus ist eine Fehleranfälligkeit reduziert, da keine weiteren Arbeitsschritte durch die Bedienperson erforderlich sind.

Nach einer bevorzugten Ausführungsform der Erfindung ist das Abdeckelement als ein Abschirmelement oder als ein Absorptionselement ausgebildet, mittels dessen elektromagnetische Felder von dem Transponder ferngehalten werden. Das Abschirmelement kann beispielsweise ein elektrisch leitendes Material und/oder ein magnetisch weiches Material aufweisen, so dass die elektrischen bzw. magnetischen Feldlinien entlang des Abschirmelementes an dem Transponder vorbeigeleitet werden.

Nach einer bevorzugten Ausführungsform der Erfindung weist das Abschirmelement als elektrisch leitendes Material ein Metallmaterial auf, das vollflächig oder gitterförmig ausgebildet ist. In der Abdeckstellung liegt dieses Metallmaterial direkt und unmittelbar auf der Antenne an. Auf diese Weise wird vorzugsweise die als Dipolantenne ausgebildete Antenne "kurzgeschlossen", so dass sie nicht in der Lage ist, elektrische Energie von einem Lesegerät aufzunehmen und an den integrierten Schaltkreis (Mikrochip) des Transponders zu leiten. Der passive Transponder ist somit nicht betriebsfähig und infolge dessen nicht auslesbar. Der Transponder kann somit nicht durch modulierte Reflexion der Funkwellen dem Lesegerät antworten.

Nach einer Weiterbildung der Erfindung kann das Absorptionselement eine Basisschicht mit einer Carbonfaser aufweisen, die aufgrund ihrer Kohlenstoffhaltigkeit elektrisch leitfähig sind. Diese Carbonfasern können in Kunststoffmaterialien, beispielsweise Folien, eingearbeitet sein, so dass sie einfach zu fertigen sind.

Nach einer Weiterbildung der Erfindung weisen der Transponderabschnitt und ein das Abdeckelement aufweisender Abdeckabschnitt die gleiche Basisschicht auf, was die Herstellbarkeit auf Rolle ermöglicht und somit die Herstellungskosten reduziert.

Nach einer Weiterbildung der Erfindung ist in der Abdeckstellung das beispielsweise aus einer Metallbeschichtung bestehende Abdeckelement auf einer dem Transponderabschnitt zugewandten Seite des Abdeckabschnitts angeordnet. Ferner ist vorzugsweise in der Abdeckstellung der Transponder auf einer dem Abdeckelement zugewandten Seite des Transponderabschnitts angeordnet, so dass eine direkte Kontaktierung zwischen der Metallbeschichtung und der Antenne des Transponders besteht. Hierdurch wird die Antenne des Transponders außer Funktion gesetzt.

Nach einer Weiterbildung der Erfindung ist der Abdeckabschnitt einstückig mit dem Transponderabschnitt verbunden. Vorzugsweise ist der Abdeckabschnitt über eine Perforation mit dem Transponderabschnitt verbunden, so dass das Abdeckelement um die Perforationslinie verschwenkbar bzw. klappbar ist. Vorteilhaft kann so die Transponderrichtung auf einfache Weise auf Rolle hergestellt werden, ohne dass der Herstellungsprozess wesentlich umgestellt werden muss.

Nach einer Weiterbildung der Erfindung ist der Abdeckabschnitt bzw. das Abdeckelement verschiebbar zu dem Transponderabschnitt angeordnet, vorzugsweise linear verschiebbar. In diesem Fall ist der Abdeckabschnitt und damit auch das Abdeckelement nicht einstückig mit dem Transponderabschnitt verbunden. Das Abdeckelement ist in einer Führung gehalten, mittels derer es in und/oder aus der Nichtabdeckstellung in die Abdeckstellung und vice versa bringbar ist. Beispielsweise kann die Führung in einer Halterung für ein Etikett zur Kennzeichnung der Waren gleichen Warentyps enthalten sein oder in einem zusätzlichen Adapter.

Nach einer Weiterbildung der Erfindung kann der Abdeckabschnitt und/oder das Abdeckelement eine kleinere Dimension aufweisen als die Dimension des Transponderabschnitts bzw. des Transponders oder der Antenne. Wenn in der Abdeckstellung beispielsweise ein Teil der Antenne somit nicht vollständig abgedeckt ist, kann beispielsweise in Abhängigkeit von der Entfernung des Lesegerätes die Nichtlesbarkeit des Transponders sichergestellt sein.

Zur Lösung der Aufgabe weist die Erfindung die Merkmale des Patentanspruchs 13 auf.

Das erfindungsgemäße Lagerungssystem ermöglicht ein sicheres und schnelles Nachbestellen von Waren, die in einem Lagerungskorpus gelagert sind. Wenn durch eine Bedienperson der Transponder von einer Abdeckstellung in eine Nichtabdeckstellung oder umgekehrt verbracht wird, hat das zur Folge, dass sich die Kommunikationsfähigkeit zwischen dem RFID-Lesegerät und dem Transponder ändert. Diese Änderung kann zur Auslösung eines Nachbestellauftrages genutzt werden, der üblicherweise softwarebasierend automatisch erfolgt. Bedienungsfreundlich braucht die Bedienperson lediglich das Abdeckelement betätigen. Nachfolgende Arbeitsschritte sind nicht erforderlich.

Zur Lösung der Aufgabe weist die Erfindung einen Adapter auf, dass die Anbringung einer Transpondervorrichtung an einer Halterung eines herkömmlichen Kennzeichnungsschildes für Waren ermöglicht. Vorteilhaft ermöglicht das Adapter die Nachrüstbarkeit eines transponderbasierten Bestellsystems (Bestellvorgang) in vorhandenen Lagerungssystemen (Warenschränken).

Ausführungsbeispiele der Erfindung werden nachfolgend anhand der Zeichnungen näher erläutert.

Es zeigen:
- Figur 1: eine Draufsicht auf eine Transpondervorrichtung nach einer ersten Ausführungsform in einer Nichtabdeckstellung,
- Figur 2: eine Draufsicht auf eine Transpondervorrichtung nach einer ersten Ausführungsform in einer Abdeckstellung,
- Figur 3: eine schematische Darstellung einer Weiterverarbeitung von durch den Transponder erzeugten elektronischen Kennzeichendaten zur Nachbestellung der Waren,
- Figur 4: ein Schrank zur Aufnahme von einer Mehrzahl von Waren unterschiedlichen Warentyps in Fächern, wobei die Fächer mit einer die jeweiligen Waren kennzeichnenden Kennzeichnung versehen ist,
- Figur 5: eine Draufsicht auf ein Fach, wobei an einem vorderen Ende eine Kennzeichenaufnahme für die Waren angeordnet ist,
- Figur 6: ein Ablaufdiagramm eines Bestellvorgangs,
- Figur 7: eine Vorderansicht eines Faches mit einer kennzeichnenden Aufnahme für eine Transpondervorrichtung nach einer zweiten Ausführungsform der Erfindung in einer Abdeckstellung,
- Figur 8: eine Vorderansicht eines Faches mit einer kennzeichnenden Aufnahme für eine Transpondervorrichtung nach einer zweiten Ausführungsform der Erfindung in einer Nichtabdeckstellung und
- Figur 9: eine Draufsicht auf einen Adapter für eine Kennzeichenaufnahme des Lagerungssystems.

Eine Transpondervorrichtung 1 kann beispielsweise zur Kennzeichnung von Waren eingesetzt werden, von denen in einem Lagerungssystem eine Vielzahl sortiert in Fächern angeordnet sind. Im Folgenden wird beschrieben, wie die Transpondervorrichtung zur Erkennung eines Leerzustandes von einem Fach des Lagerungssystems genutzt wird, wobei in den Fächern jeweils eine Mehrzahl von Waren gleichen Warentyps gelagert sind. Sobald der Leerzustand des Fachs erkannt ist, kann durch einen automatischen Bestellprozess die entsprechende Ware bestellt werden, so dass das entsprechende Fach mit den vorgesehenen Waren wieder aufgefüllt werden kann.

Zur Erkennung eines Füll- bzw. Leerzustands eines Fachs F1, F2...Fn wird die Kommunikation zwischen der Transpondervorrichtung 1 und einem RFID-Lesergerätes 2 beeinflusst. Es sei angenommen, dass die Transpondervorrichtung 1 als ein passiver Transponder 3 einen integrierten Schaltkreis 4 und eine Antenne 5 aufweist. Eine Kommunikation zwischen dem RFID-Lesergerät 2 und dem Transponder 3 ist nur möglich, wenn die entsprechende Energie für das Auslesen des Transponders 3 durch das RFID-Lesegerät 2 bereitgestellt wird.

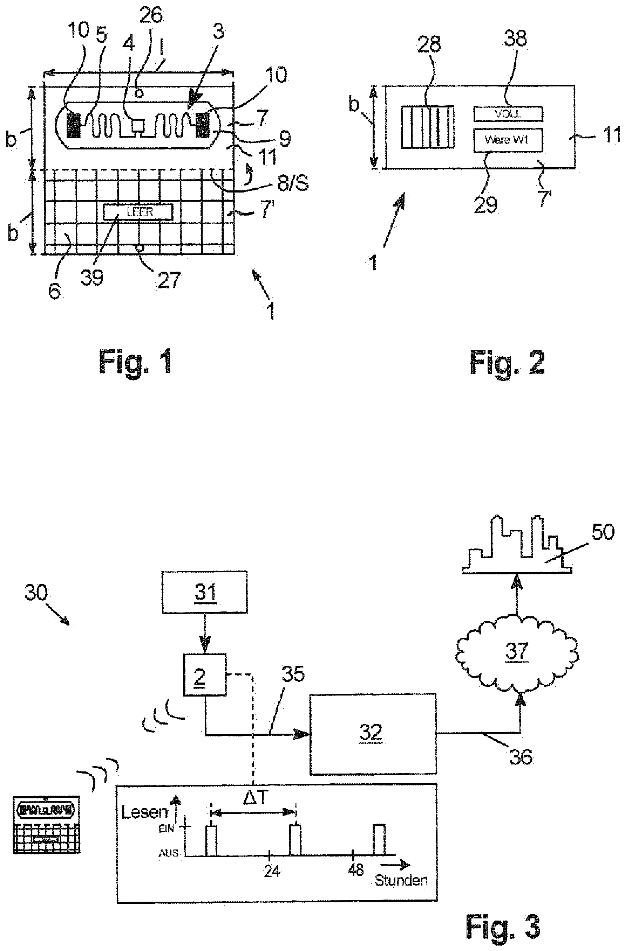

Nach der Erfindung ist vorgesehen, dass die Transpondervorrichtung 1 ein Abdeckelement 6 aufweist, das in eine Abdeckstellung gemäß Figur 2 bringbar ist, in der das Abdeckelement 6 den Transponder 3 abdeckt, und in eine Nichtabdeckstellung gemäß Figur 1 bringbar ist, in der der Transponder 3 nicht durch das Abdeckelement 6 abgedeckt ist.

Nach einer ersten Ausführungsform der Transpondervorrichtung 1 gemäß den Figuren 1 bis 5 weist die Transpondervorrichtung 1 zum einen einen Transponderabschnitt 7 auf. Auf einer Flachseite des Transponderabschnitts 7 ist der Transponder 3 mit dem integrierten Schaltkreis 4 (Mikrochip) und der Antenne 5 angeordnet.

Der Transponder 3 ist vorzugsweise auf einer flexiblen Leiterfolie 9 aufgebracht, die auf eine Basisschicht 11 auflaminiert ist. Alternativ kann der Transponder 3 auch direkt auf der Basisschicht 11 aufgebracht sein.

Die Transpondervorrichtung 1 weist zum anderen einen Abdeckabschnitt 7' enthaltend das Abdeckelement 6 auf. Der Abdeckabschnitt 7' dient dazu, in einer Abdeckstellung den Transponderabschnitt 7 zu überdecken, wobei das Abdeckelement 6 des Abdeckabschnittes 7' zumindest den Transponder 3 des Transponderabschnitts 7 überdeckt.

Im Ausführungsbeispiel gemäß Figur 1 und Figur 2 weist sowohl der Transponderabschnitt 7 als auch der Abdeckabschnitt 7' eine gleiche Basisschicht 11 auf, die im vorliegenden Ausführungsbeispiel als eine Papierschicht ausgebildet ist. Auf der Basisschicht 11 des Transponderabschnitts 7 ist der Transponder 3 mit seiner Leiterfolie 9 aufgebracht und fest mit derselben verbunden. In dem Abdeckabschnitt 7' ist das Abdeckelement 6 auf einer Basisschicht 11 des Abdeckabschnitts 7' aufgebracht und fest verbunden.

Das Abdeckelement 6 kann als ein Abschirmelement ausgebildet sein, das aus einem elektrisch leitenden Material, vorzugsweise Metallmaterial, besteht. Im vorliegenden Ausführungsbeispiel ist die Basisschicht 11 des Abdeckabschnitts 7' vollflächig mit dem metallischen Abdeckelement 6 beschichtet.

Da die Basisschicht 11 des Transponderabschnitts und die Basisschicht 11 des Abdeckabschnitts 7' einstückig durch eine Perforation 8 verbunden sind, kann das Abdeckelement 6 durch Verschwenken relativ zu dem Transponder 3 von einer Nichtabdeckstellung gemäß Figur 1 in eine Abdeckstellung gemäß Figur 2 und vice versa verbracht werden. Die Perforation bildet eine Schwenkachse S. Alternativ kann der Transportabschnitt 7 mit dem Abdeckabschnitt 7' über ein Scharnier, insbesondere Filmscharnier, verbunden sein.

Vorzugsweise ist das Abdeckelement 6 (metallische Abdeckschicht) auf einer Flachseite des Abdeckabschnitts 7' angeordnet, so dass in der Abdeckstellung gemäß Figur 2 das metallische Abdeckelement 6 unmittelbar und direkt auf dem Transponder 3 des Transponderabschnitts 7 zur Anlage kommt. Die metallische Abdeckschicht führt somit zu einem "Kurzschluss" von Enden 10 der Antenne 5 in der Abdeckstellung. Der Transponder 3 ist in dieser Abdeckstellung abgeschirmt zu dem RFID-Lesegerät 2 angeordnet, so dass ein Auslesen des Transponders 3 nicht möglich ist.

Im vorliegenden Ausführungsbeispiel ist die Dimension des Abdeckabschnitts 7' und des Transponderabschnitts 7 gleich. Sie verfügen jeweils über eine gleiche Breite b und eine gleiche Länge I.

Nach einer nicht dargestellten alternativen Ausführungsform der Erfindung kann das Abdeckelement 6 auch als ein Metallgitter ausgebildet sein, das auf der Basisschicht 11 aufgebracht ist. Durch das elektrisch leitende Material des Abdeckelementes 6 werden von dem RFID-Lesegerät 2 abgesandte elektromagnetische Felder ferngehalten.

Nach einer nicht dargestellten alternativen Ausführungsform der Erfindung kann das Abdeckelement 6 auch als ein Absorptionselement ausgebildet sein, das durch Carbonfaser gebildet ist. Die Carbonfasern sind in einer Folie eingebracht, die auf die Basisschicht 11 in dem Abdeckabschnitt 7' auflaminiert wird.

Nach einer nicht dargestellten alternativen Ausführungsform kann die Abdeckschicht auch das Abdeckelement 6 bzw. das Abschirmelement aus einem magnetisch weichen Material bestehen, so dass die magnetischen Feldlinien von dem Transponder 3 ferngehalten werden.

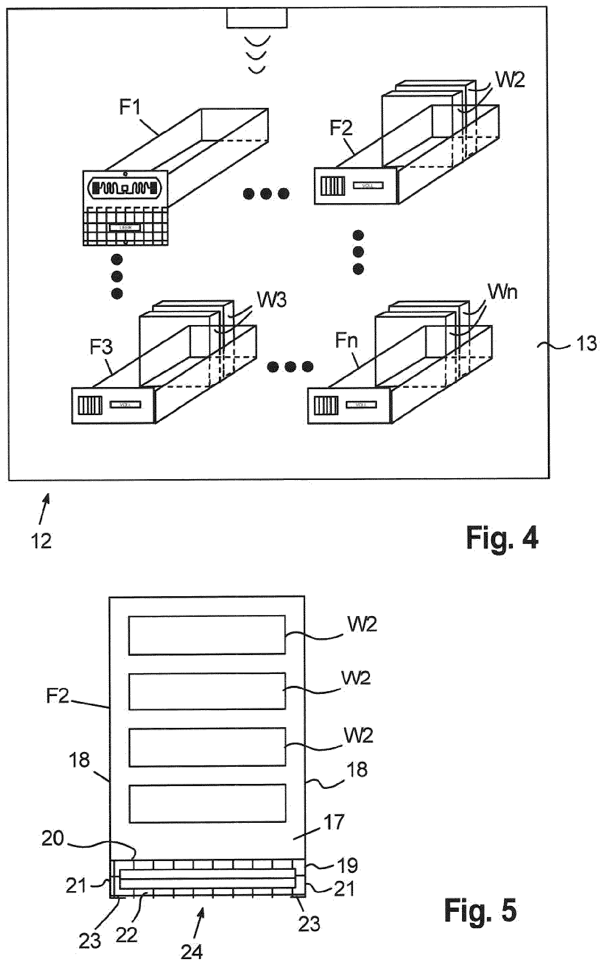

In Figur 4 ist beispielhaft ein Schrank 12 mit einem Korpus 13 dargestellt, wobei in dem Schrank 12 mehrere Fächer F1, F2, F3...Fn zur Aufnahme von Waren W1, W2, W3...Wn unterschiedlichen Warentyps angeordnet sind. Die Fächer F1, F2, F3...Fn sind schubladenartig über nicht dargestellte Führungen in den Korpus 13 verschiebbar gelagert, so dass sie in horizontaler Richtung aus einer Lage innerhalb des Korpus' 13 in eine Lage außerhalb des Korpus' 13 verschiebbar sind. Die Fächer F1, F2, F3...Fn sind quaderförmig ausgebildet mit einem Boden 17 und Seitenwänden 18. Eine Oberseite der Fächer F1, F2, F3... Fn ist offen ausgebildet, so dass eine Bedienperson die entsprechenden Waren W1, W2, W3...Wn bzw. Warenverpackungen entnehmen kann. In Figur 5 ist ein Fach F2 von oben dargestellt, das mit den Waren W2 bestückt bzw. befüllt ist. An einer Vorderseite des Fachs F2 ist eine Kennzeichenaufnahme 19 als Halterung angeordnet, so dass herkömmliche Papierschilder mit einer Beschriftung zur visuellen Kennzeichnung der in dem Fach F2 gelagerten Waren W2 gehalten sind.

Im vorliegenden Ausführungsbeispiel ist die Kennzeichenaufnahme 19 als eine schlitzförmige Aufnahme ausgebildet mit einer Rückwandung 20 und von der Rückwandung 20 randseitig nach vorne abstehenden gegenüberliegenden Seitenwandungen 21 und einer Bodenwandung 22. Die Seitenwandungen 21 weisen auf einer der Rückwandung 20 abgewandten vorderen Seite parallel zur Rückwandung 20 verlaufende Stege 23 auf, die ein offenes Fenster 24 an der Vorderseite der Kennzeichenaufnahme 19 begrenzen. Ein Kennzeichenschild, dass beispielsweise als eine Papierschicht mit einer Beschriftung auf einer Flachseite, insbesondere einem Barcode 28 und/oder schriftliche Bezeichnung 29 des entsprechenden Warentyps ausgebildet ist, kann in die schlitzförmige Kennzeichenaufnahme 19 von oben eingesetzt werden.

Die vorhandene Kennzeichenaufnahme 19 kann auch zur Aufnahme der Transpondervorrichtung 1 dienen. Da die Vorderseite der Kennzeichenaufnahme 19 offen ist, kann die im zusammengeklappten Zustand befindliche Transpondervorrichtung 1 in die Kennzeichenaufnahme 19 eingesetzt werden und ggf. der Abdeckabschnitt 7' nach unten um 180° verschwenkt werden, so dass er sich hängend in vertikaler Richtung unterhalb der Bodenwandung 22 in der Nichtabdeckstellung befindet. Die Perforation 8 bzw. die Schwenkachse S befindet sich somit in Höhe der Bodenwandung 22.

Ein Verschwenken des Abdeckabschnitts 7' zu dem Transportabschnitt 7 wird ermöglicht, da die Kennzeichenaufnahme 19 vorderseitig offen ausgebildet ist. Es sei angenommen, dass der Transponderabschnitt 7 von der Rückwandung 20 der Kennzeichenaufnahme 19 festgehalten ist. Das durch die Stege 23 der Kennzeichenaufnahme 19 begrenzte Fenster 24 der Kennzeichenaufnahme 19 weist beispielsweise eine Dimension auf, die größer ist als die Dimension des Abdeckabschnitts 7'. Auf diese Weise kann durch manuelles Angreifen des Abdeckabschnitts 7' an einer langen Randseite der Abdeckabschnitt 7' dieser aus der Abdeckstellung gemäß Figur 2 in die Nichtabdeckstellung gemäß Figur 1 verbracht werden. Damit der Abdeckabschnitt 7' in der Abdeckstellung gemäß Figur 2 verbleiben kann, weisen der Transponderabschnitt 7 und der Abdeckabschnitt 7' jeweils Befestigungselemente 26, 27 auf. Die Befestigungselemente 26, 27 können beispielsweise als Rastknöpfe ausgebildet sein. Alternativ können die Befestigungselemente 26, 27 auch Bestandteile eines Klettverschlusses sein. Die Befestigungselemente 26, 27 ermöglichen eine kraftschlüssig und/oder formschlüssige Verbindung des Transportabschnitts 7 mit dem Abdeckabschnitt 7' in der Abdeckstellung der Transpondervorrichtung 1.

Wie aus Figur 2 ersichtlich ist, kann der Abdeckabschnitt 7' auf einer zu dem Abdeckelement 6 gegenüberliegenden Seite mit einem Barcode 28 und einer Beschriftung 29 mit Buchstaben versehen sein, so dass in der Abdeckstellung für eine Bedienperson erkennbar ist, welcher Warentyp sich in dem entsprechenden Fach F1, F2, F3...Fn befindet.

Der Schrank 12 ist Teil eines Lagerungssystems 30, deren Bestandteil zusätzlich das RFID-Lesergerät 2 sowie eine Ansteuereinheit 31 zur Ansteuerung des Lesegerätes 2 und eine Warenbestelleinheit 32 umfasst.

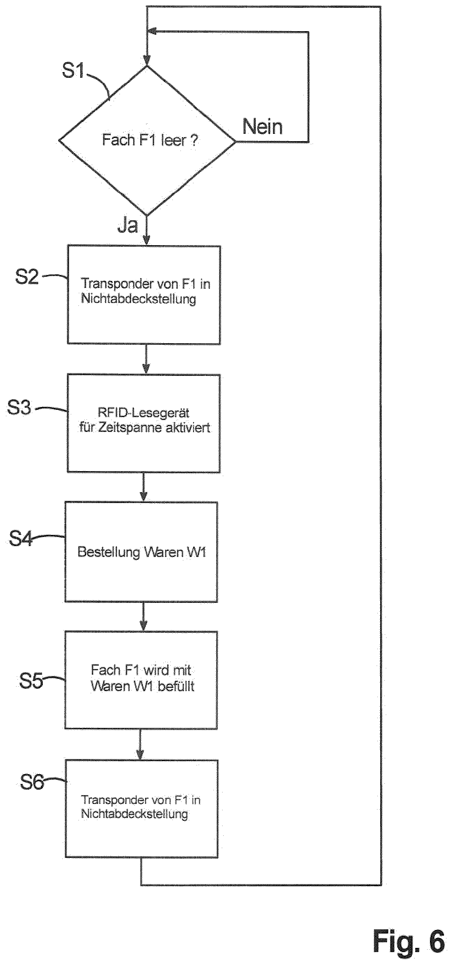

Der Ablauf der Benutzung des Lagerungssystems 30 wird im Folgenden anhand der Figur 6 näher erläutert.

Es sei angenommen, dass sich in den Fächern F1, F2, F3...Fn des Schrankes 12 eine ausreichende Anzahl von Waren W1, W2, W3...Wn befindet. In Figur 6 wird von dem Fall ausgegangen, dass eine Warenentnahme ausschließlich in dem Fach F1 erfolgt. Die gleiche Prozedur gilt im Übrigen für die weiteren Fächer F1, F2, F3...Fn. Es wird davon ausgegangen, dass die Fächer F1, F2, F3...Fn mit den entsprechenden Waren W1, W2, W3...Wn befüllt sind.

In einem ersten Schritt S1 werden die Waren W1 aus dem Fach F1 entnommen und festgestellt, ob das Fach F1 leer ist. Zur Kennzeichnung, dass das Fach F1 leer ist, verbringt die Bedienperson in Schritt S2 die Transpondervorrichtung 1 von der Abdeckstellung gemäß Figur 2 in die Nichtabdeckstellung gemäß Figur 1. Die anderen Fächer F2, F3... Fn, die sich noch im gefüllten Zustand mit Waren befinden, sind jeweils weitere Transpondervorrichtungen 1 zugeordnet, die sich in der Abdeckstellung befinden. Die den jeweiligen Fächern F1, F2, F3...Fn zugewiesenen Transpondervorrichtungen 1 sind gleich ausgebildet. Sie unterscheiden sich lediglich darin, dass in dem integrierten Schaltkreis 4 des Transponders 3 eine unterschiedliche Warenkennzeichnung abgespeichert ist, die zur Identifizierung der in dem jeweiligen Fach F1, F2, F3...Fn befindlichen Waren W1, W2, W3...Wn dient. Sind in dem Fach F1 beispielsweise Aspirintabletten mit ihren Umverpackungen angeordnet, weist der dem Fach F1 zugewiesene Transponder 3 die entsprechende Kennung auf.

In einem weiteren Schritt S3 wird das Lesergerät 2, das sich beispielsweise an einer Decke des Schrankes 12 befindet, aktiviert, so dass die lesbaren Transponder 3 der Fächer F1, F2, F3...Fn ausgelesen werden können. Da sich lediglich der dem Fach F1 zugewiesene Transponder 3 in der Nichtabdeckstellung befindet und die anderen Transponder 3 in einer Abdeckstellung, kann nur der dem Fach F1 zugewiesene Transponder 3 ausgelesen werden. Es sei angenommen, dass das Lesergerät 2 mindestens einmal am Tag aktiviert bzw. eingeschaltet wird, so dass ein Lesevorgang erfolgen kann. Gegebenenfalls kann ein Leseabstand ΔT kleiner als 24 h, beispielsweise 2 h, betragen. Das Lesegerät 2 wird mittels der Ansteuereinheit 31 zu den entsprechenden Zeiten eingeschaltet bzw. ausgeschaltet.

Ist aufgrund der Nichtabdeckstellung gemäß S2 ein Auslesen des Transponders 3 möglich, wird die entsprechende Warenkennung der Ware W1 ausgelesen und als ein Kennungssignal 35 der Warenbestelleinheit 32 zugeleitet, S4. In dem IC-Schaltkreis 4 ist die Warenkennung der Ware W1, W2, W3...Wn gespeichert, die dem entsprechenden Fach F1, F2, F3...Fn zugeordnet bzw. enthalten ist. In der Warenbestelleinheit 32 erfolgt in Abhängigkeit von der jeweiligen Größe der Fächer F1, F2, F3...Fn bzw. Fassungsvermögen der Fächer F1, F2, F3...Fn für die entsprechenden Waren W1, W2, W3...Wn eine Bestimmung der Bestellgröße der entsprechenden Ware W1, W2, W3...Wn. Ein von der Warenbestelleinheit 32 abgegebenes Bestellsignal 36 wird vorzugsweise automatisch über eine Datenverbindung 37, beispielsweise Internet, an einen Apothekendienst 50 übersandt, der für die Bereitstellung der entsprechenden Ware W1 sorgt. Sobald die bestellte Ware W1 beispielsweise in dem Krankenhaus eingegangen ist, kann Fach F1 des Schrankes 12 manuell im Schritt S5 mit der Ware W1 befüllt werden. In einem weiteren Schritt S6 wird die dem Fach F1 zugewiesene Transpondervorrichtung 1 in die Abdeckstellung verbracht, so dass der Transponder 3 nicht mehr ausgelesen werden kann.

Nach einer nicht dargestellten alternativen Ausführungsform der Erfindung kann das Lagerungssystem 30 auch derart eingerichtet sein, dass in der Abdeckstellung gemäß Figur 2 das Nachbefüllen eines Faches F1, F2, F3... Fn erforderlich ist. In diesem Fall würde das Lesergerät 2 alle den befüllten Fächern zugewiesene Transponder 3 auslesen können, während das dem nicht befüllten Fach zugewiesene Transponder 3 nicht ausgelesen werden kann.

Zur Kontrolle für die Bedienperson, ob sich die Transpondervorrichtung 1 zur Kennzeichnung des Füllzustandes des Fachs F1, F2, F3...Fn in der korrekten Schwenkstellung befindet, ist es nach einer Ausführungsform vorgesehen, dass der Abdeckabschnitt 7' auf einer im Abdeckzustand dem Transponderabschnitt 7 abgewandten Flachseite eine Beschriftung 38 mit dem Inhalt "voll" und auf einer dem Transponderabschnitt 7 zugewandten Flachseite eine Beschriftung 39 mit dem Inhalt "leer" versehen ist. Im Übrigen weist die in der Abdeckstellung zu dem Transponderabschnitt 7 abgewandten Flachseite neben der Beschriftung 39 den Barcode 28 sowie die Beschriftung 29 mit dem Inhalt "Ware W1" auf. Auf diese Weise ist erkennbar, welche Waren sich in dem jeweiligen Fach befinden.

Gleiche Bauteile bzw. Bauteilfunktionen sind mit den gleichen Bezugszeichen versehen.

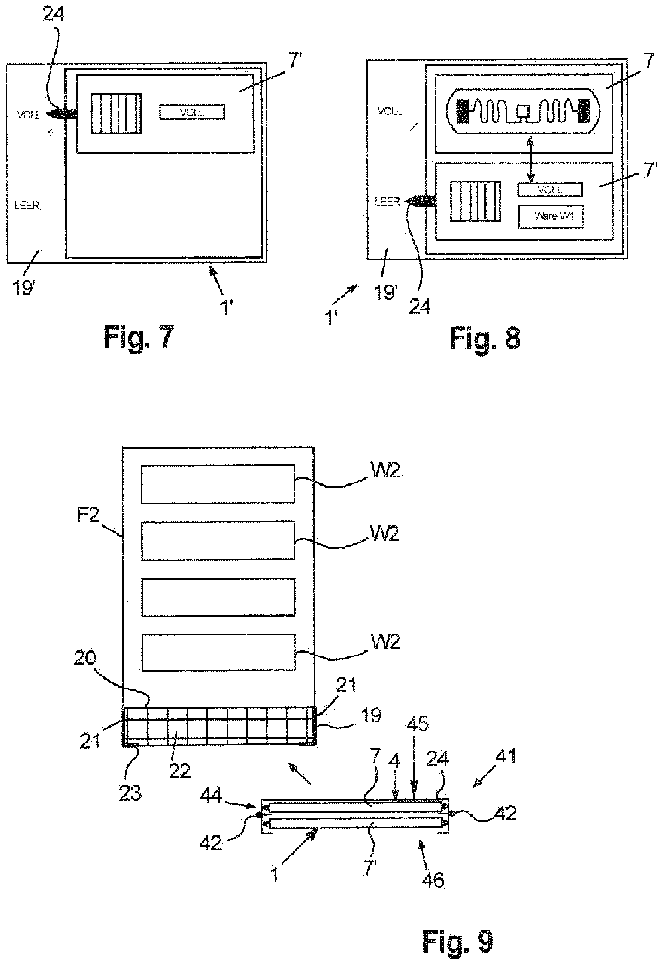

Nach einer alternativen Ausführungsform der Erfindung sind dem Schrank 12 des Lagerungssystems 30 Transpondervorrichtungen 1' zugeordnet, die nicht verschwenkbare Abschnitte, sondern zueinander linear verschiebbare Transportabschnitte 7 und Abdeckabschnitte 7' aufweisen. Bei dieser Ausführungsform ist der Transponderabschnitt 7 in einem oberen Bereich eine Kennzeichenaufnahme 19 haftend angebracht. Der Abdeckabschnitt 7' ist linear verschiebbar in einer Erstreckungsebene desselben zwischen einer oberen Stellung gemäß Figur 7, in der sich der Abdeckabschnitt 7' und der Transportabschnitt 7 in der Abdeckstellung befinden, und einer unteren Stellung gemäß Figur 8, in der sich der Abdeckabschnitt 7' in einer Nichtabdeckstellung unter Freigabe des Transponders 3 befindet. Der Transponderabschnitt 7 und der Abdeckabschnitt 7' sind vorzugsweise an gegenüberliegenden Randseiten quer zu ihrer Erstreckungsebene in einer alternativ ausgebildeten Kennzeichenaufnahme 19' versetzt zueinander geführt gelagert. Nicht dargestellte Befestigungsmittel bewirken, dass der Abdeckabschnitt 7' sowohl in der oberen Stellung gemäß Figur 7 als auch in der unteren Stellung gemäß Figur 8 festgelegt werden kann. Randseitig des Abdeckabschnitts 7' kann eine Fahne 24 angeordnet sein, so dass der Bedienperson in Abhängigkeit von der Stellung des Abdeckabschnitts 7' signalisiert wird, ob sich das entsprechende Fach F1, F2, F3...Fn im gefüllten oder in einem leeren Zustand befindet. Hierzu weist die Kennzeichenaufnahme 19' eine entsprechende Beschriftung "VOLL" und "LEER" auf.

Nach einer weiteren Ausführungsform der Erfindung ist ein Adapter 41 vorgesehen, mittels dessen die Transpondervorrichtung 1' an der Kennzeichenaufnahme 19 der entsprechenden Fächer F1, F2, F3...Fn befestigt werden kann. Zu diesem Zweck weist der Adapter 41 Mittel 42 zum lösbaren Befestigen an der Kennzeichenaufnahme 19 des Faches auf. Das Mittel 42 kann beispielsweise dadurch gebildet sein, dass die Dimension des Adapters 41 an die Dimension der Kennzeichenaufnahme 19 angepasst ist, so dass das Adapter 41 beispielsweise in den entsprechenden Öffnungen der Kennzeichenaufnahme 19 eingesetzt werden kann. Gegebenenfalls kann das Mittel 42 außenseitig als eine Haltewulst ausgestaltet sein, so dass der Adapter 41 lagesicher in der Kennzeichenaufnahme 19 gehalten ist. Ferner umfasst der Adapter 41 Mittel 44 zur Aufnahme der Transpondervorrichtung 1', wobei als Mittel zur Aufnahme 44 zwei parallel zueinander versetzte Fächer 45, 46 vorgesehen sind, so dass in dem hinteren Fach 45 der Transponderabschnitt 7 und in dem vorderen Fach 46 der Abdeckabschnitt 7' eingesetzt werden kann. Das hintere Fach 45 weist eine kleinere Tiefe auf als das vordere Fach 46, so dass der Transponderabschnitt 7 stets in der oberen Lage gemäß Figur 7 und 8 gehalten ist. Das vordere Fach 46 weist einen Boden auf, so dass beim Einsetzen des Abdeckabschnitts 7' in das vordere Fach 46 diese in die untere Lage gemäß Figur 7 bringbar ist. Der Adapter 41 weist ferner nicht dargestellte Befestigungsmittel auf, so dass der Abdeckabschnitt 7' sowohl in die untere Stellung gemäß Figur 7 als auch in die den Transponder 3 überdeckende obere Stellung gemäß Figur 8 bringbar ist.

Nach einer nicht dargestellten alternativen Ausführungsform kann das Lesegerät 2 auch als mobiles Lesegerät ausgebildet sein, das durch eine Bedienperson bedient wird. In diesem Fall müsste in regelmäßigen Abständen die Bedienperson den Schrank 12 auf den aktuellen Füllzustand der Fächer F1, F2, F3...Fn überprüfen.

Nach einer nicht dargestellten Ausführungsform der Erfindung kann das Lesegerät 2 in der Nähe des Schrankes 12 oder des die Fächer F1, F2, F3...Fn aufnehmenden Regals fest angeordnet sein, beispielsweise in dem Raum, in dem der Schrank 12 bzw. das Regal steht, unter der Decke montiert.

Nach einer nicht dargestellten alternativen Ausführungsform der Erfindung kann der Transponder 3 bzw. der Transponderabschnitt 7 vollständig von dem Abdeckelement 6 umgeben sein. Das Abdeckelement 6 könnte beispielsweise rohrförmig ausgebildet sein, wobei der Transponderabschnitt 7 innerhalb dieses rohrförmigen Abdeckabschnittes 7' angeordnet ist.

Nach einer weiteren nicht dargestellten Ausführungsform der Erfindung kann der Transponderabschnitt 7 einen integrierten Schaltkreis, eine Primärantenne und eine Sekundärantenne umfassen, so dass der Transponder 3 eine größere Reichweite aufweist. Die Sekundärantenne kann beispielsweise als eine rohrförmige bzw. spiralförmige Antenne ausgebildet sein. Die Primärantenne und der integrierte Schaltkreis sind vorzugsweise in einem mittleren Bereich innerhalb dieser Sekundärantenne angeordnet. Der Abdeckabschnitt 7' ist ebenfalls rohrförmig ausgebildet und weist einen größeren Durchmesser auf als die Sekundärantenne, so dass durch axiales relatives Verschieben zwischen dem rohrförmigen Abdeckabschnitt und der rohrförmigen Sekundärantenne die Transpondervorrichtung 1, 1' in die Abdeckstellung oder in die Nichtabdeckstellung verbringbar ist.

Alternativ kann die Kennzeichenaufnahme 19 eine andere Form aufweisen und als eine Halterung dienen.

Der passive Transponder 3 und das Lesegerät sind dazu eingerichtet, im UHF-Frequenzbereich, vorzugsweise in einem Frequenzbereich von 865 MHz bis 869 MHz oder von 902 MHz bis 928 MHz miteinander zu kommunizieren.

## Patentansprüche

1. Transpondervorrichtung mit einer Basisschicht (11) und mit einem auf derselben aufgebrachten Transponder (3) enthaltend einen integrierten Schaltkreis (4) und eine Antenne (5), **dadurch gekennzeichnet, dass** die Basisschicht (11) zusammen mit dem Transponder (11) einen Transponderabschnitt (7) bildet und dass ein relativ zu dem Transponderabschnitt (7) bewegbarer Abdeckabschnitt (7') vorgesehen ist, der über ein Abdeckelement (6) verfügt, das derart ausgebildet ist, dass in einer Abdeckstellung der Transpondervorrichtung (1, 1'), in der das Abdeckelement (6) den Transponder (3) abdeckt, der Transponder (3) durch ein Lesegerät (2) nicht auslesbar ist, und in einer Nichtabdeckstellung der Transpondervorrichtung (1, 1 `), in der das Abdeckelement (6) den Transponder (3) nicht abdeckt, der Transponder (3) von dem Lesegerät (2) auslesbar ist.

2. Transpondervorrichtung nach Anspruch 1, **dadurch gekennzeichnet, dass** das Abdeckelement (6) als ein Abschirmelement ausgebildet ist, mittels dessen in der Abdeckstellung von dem Lesegerät (2) gesendete elektromagnetische Felder von dem Transponder (3) der Transpondervorrichtung (1, 1') ferngehalten werden.

3. Transpondervorrichtung nach Anspruch 2, **dadurch gekennzeichnet, dass** das Abschirmelement (6) aus einem elektrisch leitenden Material und/oder einem magnetisch weichen Material besteht.

4. Transpondervorrichtung nach Anspruch 2 oder 3, **dadurch gekennzeichnet, dass** das Abdeckelement (6) ein vollflächiges Metallmaterial oder ein gitterförmiges Metallmaterial umfasst, das vorzugsweise in der Abdeckstellung unmittelbar an der Antenne (5) des Transponders (3) anliegt.

5. Transpondervorrichtung nach Anspruch 1, **dadurch gekennzeichnet, dass** das Abdeckelement (6) als ein Absorptionselement ausgebildet ist, das die von dem Lesegerät (2) abgestrahlten elektromagnetischen Wellen absorbiert.

6. Transpondervorrichtung nach einem der Ansprüche 1 bis 5, **dadurch gekennzeichnet, dass** der Transponder (3) und das Abdeckelement (6) auf einer gleichen Basisschicht (11) aufgebracht sind.

7. Transpondervorrichtung nach einem der Ansprüche 1 bis 6, **dadurch gekennzeichnet, dass** der Abdeckabschnitt (7') schwenkbar zu dem Transponderabschnitt (7) angeordnet ist, wobei das Abdeckelement (6) in der Abdeckstellung die Antenne (5) des Transponders (3) teilweise oder vollständig überdeckt und/oder zumindest bereichsweise die Antenne (5) des Transponders (3) kontaktiert.

8. Transpondervorrichtung nach einem der Ansprüche 1 bis 7, **dadurch gekennzeichnet, dass** der Abdeckabschnitt (7') über ein Scharnier, beispielsweise Filmscharnier, oder über eine Perforation (8) mit dem Transponderabschnitt (7) einstückig verbunden ist.

9. Transpondervorrichtung nach einem der Ansprüche 1 bis 8, **dadurch gekennzeichnet, dass** der Abdeckabschnitt (7') und/oder das Abdeckelement linear verschiebbar zu dem Transponderabschnitt (7) gelagert ist.

10. Transpondervorrichtung nach einem der Ansprüche 1 bis 9, **dadurch gekennzeichnet, dass** der Transponder (3) als ein passiver Transponder (3) ausgebildet ist ohne eine eigene Energieversorgung.

11. Transpondervorrichtung nach einem der Ansprüche 1 bis 10,
**dadurch gekennzeichnet, dass** der Transponder (3) in der Abdeckstellung umfangsseitig von dem Abdeckelement (6) umgeben ist.

12. Transpondervorrichtung nach einem der Ansprüche 1 bis 11,
**dadurch gekennzeichnet, dass** der Abdeckabschnitt (7') auf einer zu der das Abdeckelement (6) aufweisenden gegenüberliegenden Flachseite eine Beschriftung (29) und/oder einen Barcode (28) zur Kennzeichnung von der Transpondervorrichtung (1, 1') zugewiesenen Waren (W1, W2, W3...Wn) aufweist.

13. Lagerungssystem mit einem Korpus (13), in dem eine Mehrzahl von Fächern (F1, F2, F3...Fn) zur Aufnahme von Waren (W1, W2, W3...Wn) angeordnet sind, wobei in den Fächern (F1, F2, F3...Fn) jeweils eine Mehrzahl von Waren (W1, W2, W3...Wn) des gleichen Warentyps lagerbar sind und wobei jedem Fach (F1, F2, F3...Fn) eine Kennzeichnungsaufnahme (19) zur Aufnahme eines Kennzeichnungsmittels zur visuellen Kennung der Waren (W1, W2, W3...Wn) zugeordnet ist, **dadurch gekennzeichnet, dass** in den Kennzeichnungsaufnahmen (19) jeweils eine Transpondervorrichtung (1, 1') angeordnet ist, wobei in dem IC-Schaltkreis (4) der Transpondervorrichtung (1, 1') eine Warenkennung von den jeweiligen Fächern (F1, F2, F3...Fn) zugewiesenen Waren (W1, W2, W3...Wn) abgespeichert ist,
- dass ein Lesergerät (2) zum Auslesen der Transponder (3) nach einem der Ansprüche 1 bis 12 vorgesehen ist,
- dass eine Ansteuereinheit (34) zur Ansteuerung des Lesegerätes (2) vorgesehen ist, mittels dessen das Lesegerät (2) in vorgegebenen Zeitabständen (ΔT) aktiviert ist zum Auslesen der Transponder (3),
- dass eine Warenbestelleinheit (32) vorgesehen ist, die in Abhängigkeit von dem Lesegerät (2) erzeugten Kennungssignalen (35) ein Bestellsignal (36) erzeugt zur Bestellung von Waren (W1, W2, W3...Wn) von Fächern (F1, F2, F3...Fn), deren Leerzustand oder Füllzustand durch das Auslesen des entsprechend dem Fach (F1, F2, F3...Fn) zugewiesenen Transponders (3) erkannt wird.

14. Lagerungssystem nach Anspruch 13, **dadurch gekennzeichnet, dass** das Lesegerät (2) fest an dem Korpus (13) des Lagerungssystems (30) montiert ist oder dass das Lesegerät (2) in der Nähe des Korpus' (13) fest angeordnet ist oder dass das Lesegerät (2) als ein mobiles Lesegerät ausgebildet ist.

15. Adapter für eine Fächerkennzeichnung nach Anspruch 13 oder 14 mit Mitteln (44) zur Aufnahme einer Transpondervorrichtung (1, 1') nach einem der Ansprüche 1 bis 12 und mit Mitteln (42) zum lösbaren Befestigen an einer Halterung (Kennzeichenaufnahme 19, 19') der Fächer (F1, F2, F3...Fn) für ein Kennzeichnungsschild.
